# EUROPEAN PATENT APPLICATION

(11) **EP 1 679 332 A1**
(43) Date of publication of application: **12.07.2006**
(21) Application number: 04773349.8
(22) Date of filing: 15.09.2004
(51) Int. Cl.: C08G 63/82

(54) **PROCESS FOR PRODUCING ALIPHATIC POLYESTER AND ALIPHATIC POLYESTER**

(30) Priority: 16.09.2003 JP 2003323134
(71) Applicant: MITSUBISHI CHEMICAL CORPORATION, Tokyo 108-0014 (JP)
(72) Inventor: AOSHIMA,Takayuki Mitsubishi Chem. Grp.Sce, Aoba-ku, Yokohamashi (JP); HOSHINO,Toyomasa, Mitsubishi Chem.Grp.Sce, Aoba-ku Yokohama-shi, Kanagawa (JP); NIMURA, Hitoshi, DIA RESEARCH MARTECH INC., Mie 510-8530 (JP)
(74) Representative: Vossius & Partner
(86) International application number: PCT/JP2004/013863
(87) International publication number: WO 2005/026232

(57) **Abstract**

An object of the present invention is to provide an aliphatic polyester with a high polymerization degree having an excellent thermal stability and an industrially advantageous and efficient process for producing the same.

In the invention, at the production of a polyester having diol unit(s) and aliphatic dicarboxylic acid unit(s), a metal oxide containing at least one element selected from the group consisting of metal elements belonging to the Groups 3 to 6 of the Periodic Table and at least one element selected from the group consisting of silicon element and metal elements belonging to the Groups 1, 2, 12, 13, and 14 of the Periodic Table is used as a catalyst.

## Description

### Technical Field

The present invention relates to a process for producing an aliphatic polyester and to an aliphatic polyester. More specifically, it relates to a process for producing an aliphatic polyester which is excellent in moldability in injection molding, blow molding, extrusion molding, or the like, thermal stability, and tensile properties as well as which has an excellent biodegradability and is good for the environment, and an aliphatic polyester obtained by the process.

### Background Art

Because of an increasing interest in environmental issues, aliphatic polyesters having biodegradability have been applied to fibers, molded articles, films, sheets, and the like, as resins for further avoiding environmental burden. For example, since polybutylene succinate and/or polybutylene adipate having biodegradability have mechanical properties resemble to those of polyethylene, they have been developed as alternative polymers for polyethylene.

As an economically advantageous process for producing an polyester, there is known and adopted since a long time ago a process for producing a polyester with a high polymerization degree wherein an ester oligomer is produced by a direct esterification reaction of a dicarboxylic acid with a diol or an ester exchange reaction of an alkyl ester of a dicarboxylic acid with a diol in the presence of a catalyst and then the polyester with a high polymerization degree is produced by subjecting the oligomer to an ester exchange reaction under heating and under reduced pressure with removing the diol formed by distillation.

However, since thermal stability of an aliphatic polyester is generally low and hence a decrease of the molecular weight due to thermal decomposition occurs during the polymerization reaction, it is impossible to obtain a polyester with a high polymerization degree having a practically sufficient strength by a conventional process for producing the polyester. It is proposed that the concentration of the polymer terminal (hydroxyl group or carboxyl group), particularly a remaining carboxyl group remarkably affects adversely thermal stability of the polymer (e.g., cf. Patent Document 1). Based on such a background, various kinds of contrivance are applied to the production process.

For example, there are proposed processes for enhancing melt viscosity of the polymer through extension of the polymer chain length by carrying out melt polymerization using an organoalkoxy metal compound such as tetrabutyl titanate as a catalyst with adding a diisocyanate or a diphenyl carbonate as a chain extender (e.g., cf. Patent Document 2). Since these processes comprising adding the chain extenders can easily increase the molecular weight of the polyester, the processes are apparently considered to be effective production processes for aliphatic polyesters. However, there are problems that the reaction process comprises two steps and thus is complicated and also, with regard to the resulting polyester, in addition to a slight decrease of crystallinity and melting point thereof, biodegradability of the resulting polyester tends to decrease owing to the urethane bond contained in the molecule. Moreover, from the viewpoint of the use as a biodegradable resin, in the case of the diisocyanate, there still remains a problem that a toxic diamine is formed in the progress of its decomposition and may be accumulated in the soil. In the case of the diphenyl carbonate, there also remains a problem that toxic by-product phenol and unreacted diphenyl carbonate are left in the polyester.

Moreover, as a highly active catalyst, there are proposed processes for producing aliphatic polyesters using Ge compounds such as an organoalkoxy germanium and germanium oxide (e.g., cf. Patent Document 3), Zn compounds such as zinc acetylacetonate and an zinc salt of organic acid (e.g., cf. Patent Document 4), an acetylacetonate salt of Fe, Mn, Co, Zr, V, Y, La, Ce, Li, Ca, or the like (e.g., cf. Patent Document 5), or an organoalkoxy titanium compound (e.g., cf. Patent Document 6). However, since the polymerization degree is not sufficiently increased even when these production processes are adopted, a chain extender has been employed as mentioned above. In addition, since these organic metal compounds usually have a property labile to hydrolysis, there are limitations on a method for storing the catalysts at high temperature and a method for introducing the catalysts at polymerization, or part of the catalyst is deactivated by water generated during the polycondensation reaction, so that there is a problem that it is difficult to control their catalytic activity and hence it is difficult to exhibit reproducibility in the production. For example, tetrabutyl titanate as a representative catalyst is not only a explosive and combustible substance having a flash point of 53°C but also is known as a compound poor in thermal stability, hydrolyzability, and light stability, e.g., a compound which is thermally polymerizable at high temperature or is discolored with light. Moreover, there remains a problem that the deactivated catalyst may be incorporated as clumps into a product, resulting in troubles in the process of plastic molding, the shape of the molded article, and the like.

As a method for overcoming such various problems, the present applicant has proposed that a polyester with a high polymerization degree can be produced with a high acitivity by adding a bifunctional oxycarboxylic acid such as lactic acid to the polymerization components to form a ternary system (1,4-butylene glycol, succinic acid, and lactic acid) or a quaternary system (1,4-butylene glycol, succinic acid, adipic acid, and lactic acid) and using a Ge-based catalyst (e.g., cf. Patent Document 7). However, the aliphatic polyester produced using a germanium compound which is scarce as resources and expensive is a polyester which is disadvantageous in resources and cost from the viewpoint of applications as commodity plastics. In addition, in the case that germanium oxide is used in a solid form as a catalyst, the polymerization reaction proceeds only very slowly. Therefore, for producing a polyester with a high polymerization degree, it is necessary to add germanium oxide in a solvent-dissolved form to the reaction system, so that the process is complicated and thus is disadvantageous in industrial production.

Furthermore, such an aliphatic polyester exhibiting biodegradability generally has a characteristic that it is apt to undergo a hydrolysis reaction and hence there still remains a practical problem of improving durability of mechanical properties such as tensile properties in relatively long-term storage and use. As a method for improving hydrolysis resistance, there is proposed a method of mixing an aliphatic polyester with a carbodiimide compound (e.g., cf. Patent Document 8). However, the effect is not sufficient, for example, the tensile elongation percentage at break decreases to less than 50% of the initial value after four weeks of test, and thus there exists practically a serious problem.

On the other hand, recently, in the production of an aromatic polyester, there has been developed a production technology using an inexpensive titanium dioxide-based solid catalyst (e.g., cf. Patent Document 9). Since the catalyst system is an inorganic metal oxide catalyst, there is a characteristic that it does not have the above hazardous nature and a defect associated with the instability of the substance as in the case of the organic titanium compound. Moreover, although the catalyst system is a heterogeneous solid catalyst, it has a characteristic that its catalytic activity is higher than that of the organic titanium compound. Usually, it is advantageous in view of reaction rate that a polyester-producing catalyst is melted or dissolved in a polymer. However, in the catalyst system, the polymerization rate is enhanced by carrying out the polymerization at an extremely high temperature of 280 to 290°C. The content of the terminal carboxyl group in the polymer, which remarkably affects thermal stability of a polymer, is about the same as the concentration in a polymer produced with the organic titanium catalyst system. Therefore, a catalyst having such characteristics enables polymerization at a high temperature in a system such as highly thermally stable aromatic polyesters and thus color tone of the polymer can be improved. However, at the production of aliphatic polyesters having a poor thermal stability, it is usually difficult to apply the catalyst and it is still a problem how to increase the polymerization rate at the lower temperature or how to enhance the thermal stability of the polyesters.
[Patent Document 1]
   JP-A-7-53700
[Patent Document 2]
   JP-A-4-189822
[Patent Document 3]
   JP-A-5-39350
[Patent Document 4]
   JP-A-5-39352
[Patent Document 5]
   JP-A-5-39353
[Patent Document 6]
   JP-A-5-70566
[Patent Document 7]
   JP-A-8-239461
[Patent Document 8]
   JP-A-11-80522
[Patent Document 9]
   JP-A-8-208822

### Disclosure of the Invention

The present invention is conducted in view of the above circumstances and an object of the invention is to provide a polyester with a high polymerization degree having sufficient tensile properties by an industrially advantageous process.

As a result of extensive studies on polycondensation catalysts for achieving the above object, the conventional processes using the organic metal compounds having an organic group are processes for increasing the polycondensation rate by adding these catalysts to the polymerization systems but these catalysts may also accelerate decrease of molecular weight by thermal decomposition during the polymerization reaction owing to high binding ability/affinity thereof especially in the case of an aliphatic polyester, which is a target of the invention, and hence it have been presumed that a polyester with a high polymerization degree is hardly obtained. On the other hand, the present inventors have found that, when a specific inorganic metal compound is used, a polyester with a high polymerization degree can be easily produced since the polycondensation reaction proceeds with suppressing the thermal decomposition of the polymer, and thus they have accomplished the invention.

The first gist of the invention lies on a process for producing an aliphatic polyester having diol unit(s) and aliphatic dicarboxylic acid unit(s), wherein a metal oxide containing at least one element selected from the group consisting of metal elements belonging to the Groups 3 to 6 of the Periodic Table and at least one element selected from the group consisting of silicon element and metal elements belonging to the Groups 1, 2, 12, 13, and 14 of the Periodic Table is used as a catalyst.

The second gist of the invention lies on an aliphatic polyester comprising aliphatic diol unit(s) and aliphatic dicarboxylic acid unit(s), wherein the amount of a metal oxide belonging to the Group 3 to 6 of the Periodic Table contained in the polyester is from 1 ppm to 3,000 ppm as an amount in terms of the metal atom of the Group 3 to 6 and reduced viscosity (ηsp/C) is 1.6 or more.

According to the present invention, there is easily produced an aliphatic polyester with a high polymerization degree having sufficient tensile properties. Furthermore, the polyester obtained by the production process of the invention is a polyester excellent in mechanical physical properties such as moldability in injection molding, blow molding, extrusion molding, or the like, thermal stability, and tensile properties because thermal decomposition and thermal deterioration induced by a residual catalyst and a terminal carboxyl group are reduced.

### Best Mode for Carrying Out the Invention

The following will explain the present invention in detail.

### Metal oxide

In the invention, a metal oxide containing at least one element selected from the group consisting of metal elements belonging to the Groups 3 to 6 of the Periodic Table and at least one element selected from the group consisting of silicon element and metal elements belonging to the Groups 1, 2, 12, 13, and 14 of the Periodic Table is used as the catalyst for producing the aliphatic polyester. In the invention, the metal oxide includes a composite oxide and a metal oxide containing a hydroxyl group.

As specific metal elements, scandium, yttrium, titanium, zirconium, vanadium, molybdenum, tungsten, and lanthanoid metals are preferred. In view of environment and resources, titanium, zirconium, lanthanoid metals, molybdenum, and tungsten are preferred. For the reason of particularly high polymerization activity, titanium and/or zirconium are more preferred and titanium is most preferred. Two or more kinds of metal elements may be contained.

In the invention, an aliphatic polyester with a high polymerization degree can be produced when a (composite) oxide or hydroxide containing, in addition to the above metal elements, at least one element selected from the group consisting of silicon and metal elements belonging to the Groups 1, 2, 12, 13, and 14 of the Periodic Table (hereinafter referred to as "the other metal elements") is used as the catalyst.

As the other metal elements, there may be mentioned lithium, sodium, potassium, magnesium, calcium, zinc, boron, aluminum, germanium, tin, antimony, and the like. They may be used singly or in combination of two or more thereof in any ratio. Of these, one or a combination of two or more of metals selected from the group consisting of magnesium, calcium, zinc, aluminum, and germanium is preferred. Of these, magnesium, calcium, and aluminum are more preferred and magnesium is particularly preferred.

In the invention, with regard to the molar ratio of the metal element(s) of the Group 3 to 6 of the Periodic Table (former) to silicon and the other metal element(s) (latter), the molar ratio of latter element(s) to the total of both elements (former and latter) is usually 1 mol% or more, preferably 5 mol% or more, more preferably 10 mol% or more as a lower limit and usually 95 mol% or less, preferably 80 mol% or less, more preferably 70 mol% or less as an upper limit. In the case that both of silicon and the other metal(s) are contained, with regard to the molar ratio of silicon to the other metal element(s), the molar ratio of the other metal element(s) to the total of both elements is usually 99 mol% or less, preferably 80 mol% or less, more preferably 60 mol% or less, further preferably 50 mol% or less.

The process for producing the catalyst in the invention is not particularly limited but the catalyst is usually produced by hydrolyzing an organic compound(s), such as alkoxy salt(s), carboxylate salt(s), or β-diketonate salt(s) or inorganic compound(s) such as halide(s) or carbonate(s) containing metal element(s) of the Groups 3 to 6 of the Periodic Table, followed by dehydration and drying, if necessary. Alternatively, a process for producing the polymerization catalyst by dehydration of a metal hydroxide is also suitably used. With regard to titanium and zirconium among the metal elements of the Groups 3 to 6 of the Periodic Table, the following will show specific examples of organic compounds and inorganic compounds containing them.

As the titanium compounds, there may be, for example, mentioned alkoxytitaniums such as tetrapropyl titanate, tetrabutyl titanate, and tetraphenyl titanate, carboxylate salts such as titanium bis(ammonium lactate) dihydroxide, titanium bis(ethylacetoacetate) diisopropoxide, polyhydroxytitanium stearate, and titanium lactate, β-diketonate titanium salts such as titanium (oxy)acetylacetonate and titanium (diisopropoxide) acetylacetonate, halogenated titaniums such as titanium tetrachloride, titanium tetrabromide, and titanium trichloride, and the like.

Of these, halogenated titaniums and alkoxy titaniums are preferred. Specifically, titanium tetrachloride, tetrapropyl titanate, and tetrabutyl titanate are preferred.

As the zirconium compound, there may be, for example, mentioned alkoxy zirconiums such as zirconium ethoxide, zirconium propoxide, and zirconium butoxide, carboxylate salts such as zirconium acetate, zirconium-2-ethylhexanoate; β-diketonate zirconium salts such as zirconium acetylacetonate, halogenated zirconiums such as zirconium tetrachloride, zirconium tetrabromide, and zirconium dichloride oxide, and the like. Of these, halogenated zirconiums and alkoxy zirconiums are preferred. Specifically, zirconium tetrachloride, zirconium propoxide, and zirconium butoxide are preferred.

As the organic and inorganic compounds of the other metals, there may be mentioned scandium compounds such as scandium carbonate, scandium acetate, scandium chloride, and scandium acetylacetonate, yttrium compounds such as yttrium carbonate, yttrium chloride, yttrium acetate, and yttrium acetylacetonate, vanadium compounds such as vanadium chloride, vanadium oxide trichloride, vanadium acetylacetonate, and vanadium acetylacetonate oxide, molybdenum compounds such as molybdenum chloride and molybdenum acetate, tungsten compounds such as tungsten chloride, tungsten acetate, and tungstic acid, lanthanoid compounds such as cerium chloride, samarium chloride, and ytterbium chloride, and the like.

In the case of producing a metal oxide containing silicon in addition to the metal elements of the Groups 3 to 6 of the Periodic Table, silicon compounds such as silicate compounds, halogenated silicon compounds, siloxane compounds, silanol compounds, and silanolate compounds are used as silicon sources.

As specific silicon compounds, there may be mentioned silicate compounds such as tetramethoxysilane, tetraethoxysilane, tetrabutoxysilane, tetraisopropoxysilane, tetrabutoxysilane, tetraphenoxysilane, and tetrabenzyloxysilane, halogenated silicon compounds such as tetrachlorosilane and dimethyldichlorosilane, siloxane compounds such as disiloxane, trisiloxane, dimethyldisiloxane, hexamethyldisiloxane, and polydimethylsiloxane, silanol compounds such as silanol, silanediol, and phenylsilanetriol, silanolate compounds such as sodium triphenylsilanolate, and the like. Of these, particularly, silicate compounds and halogenated silicon compounds are preferred. As the silicate compounds, alkoxysilane compounds are preferred.

In the case of producing a composite oxide or hydroxide having the other metal element, although not particularly limited, organic compounds such as alkoxy salts, carboxylate salts or β-diketonate salt or inorganic compounds such as hydroxides, halides, or carbonates of lithium, sodium, potassium, magnesium, calcium, zinc, boron, aluminum, germanium, tin, antimony, and the like are employed as metal sources (hereinafter referred to as "catalyst aids"). Of these, for the reason of easy availability and possibility of obtaining highly active catalysts, carboxylate salts, alkoxy salts, halides, and carbonate salts are preferred.

Specifically, as the lithium compounds, there may be mentioned lithium carbonate, lithium chloride, lithium bromide, lithium acetate, lithium butoxide, and the like. As the sodium compounds, there may be mentioned sodium acetate, sodium ethoxide, sodium chloride, sodium carbonate, and the like. As the potassium compounds, there may be mentioned potassium acetate, potassium chloride, potassium carbonate, potassium butoxide, and the like. As the magnesium compounds, there may be mentioned magnesium carbonate, magnesium acetate, magnesium chloride, magnesium bromide, magnesium ethoxide, and the like. As the calcium compounds, there may be mentioned calcium acetate, calcium ethoxide, calcium chloride, calcium carbonate, and the like. As the zinc compounds, there may be mentioned zinc acetate, zinc carbonate, zinc chloride, acetylacetate salt of zinc, and the like. As the boron compounds, there may be mentioned boron bromide, boric acid, tributyl borate, and the like. As the aluminum compounds, there may be mentioned aluminum hydroxide, aluminum chloride, aluminum ethoxide, aluminum acetate, and the like. As the germanium compounds, there may be mentioned germanium oxide, germanium acetate, germanium butoxide, and the like. As the tin compounds, tin chloride, tin acetate, tin 2-ethylhexanoate, and the like. As the antimony compounds, there may be mentioned antimony acetate and the like.

In the invention, as the process for producing the catalyst for producing an aliphatic polyester, there may be, for example, mentioned, after a catalyst precursor containing metal element(s) of the Groups 3 to 6 of the Periodic Table was mixed with compound(s) (silicon compound and/or catalyst aid) containing at least one element selected from the group consisting of silicon and metal elements belonging to the Groups 1, 2, 12, 13, and 14 of the Periodic Table in any ratio, without particular limitation, (1) a process of adding the mixture into water, (2) a process of adding water, (3) a process of introducing a gas containing water, (4) a process of reacting then with a compound having crystal water, such as copper sulfate. The hydrolysis may be carried out in any manner, e.g., in a solid state or melted state of the metal compounds or in a suspended state or dissolved state in a solvent.

As the solvent when it is used in the hydrolysis, there may be mentioned alcohols such as methanol, ethanol, isopropanol, and butanol, diols such as ethylene glycol, butanediol, and pentanediol, ethers such as diethyl ether and tetrahydrofuran, nitriles such as acetonitrile, hydrocarbon compounds such as heptane and toluene, and the like.

The temperature at which the hydrolysis is carried out is usually from 0°C to 100°C, preferably 70°C or lower.

In the case that halides are used as a catalyst precursor, a silicon compound, and a catalyst aid, hydrogen halide is generated by the hydrolysis and hence the solution becomes acidic. Since there is a case that the hydrolysis is not completed thereby, the pH may be adjusted by adding a base. In this case, the pH of the final solution after the hydrolysis is preferably 4 or higher, more preferably 6 or higher.

As a pH adjuster, there may be mentioned ammonia, hydroxides, carbonates, hydrogen carbonates, and oxalates of sodium, potassium, magnesium, and the like, urea, basic organic compounds, and the like. Of these ammonia is preferred. The pH adjuster may be added to a solution or suspension to be hydrolyzed as it is or after dissolved in a solvent such as water but the addition after dissolution in a solvent such as water is preferred. The addition of the pH adjuster is preferably carried out at 70°C or lower.

The resulting hydrolyzate may be subjected to solid-liquid separation, if necessary, and also to operations such as washing, drying, baking, pulverizing, and the like. As a washing liquid, water or an organic solvent such as ethanol can be used but water is preferred. Moreover, the hydrolyzate may contain organic groups remaining partly unhydrolyzed, the amount of which is usually 30% by weight or less, preferably 20% by weight or less, more preferably 10% by weight or less, particularly preferably 1% by weight or less as an amount of hydrocarbon group in the whole amount of the metal oxide.

The hydrolyzate produced as mentioned the above can be used as a catalyst for producing an aliphatic polyester without further treatment but the hydrolyzate after washing can be dried, if necessary, and a solid obtained by drying the hydrolyzate is preferred. Drying can be carried out under normal pressure or reduced pressure. The drying temperature is not particularly limited but is preferably from 30°C to 200°C. Moreover, prompt drying is preferred. Furthermore, the resulting solid may be baked. The baking temperature is usually from 200°C to 500°C and the solid is converted into an oxide form by baking. The baking time is from 1 minute to about 100 hours.

In the invention, after drying, the solid after baking is further preferably pulverized. The average particle size of the powder after pulverization is preferably 1 nm to 100 µm, more preferably 50 µm or less, particularly preferably 10 µm or less.

Moreover, the composite oxide or hydroxide containing metal element(s) of the Group 3 to 6 of the Periodic Table and at least one element selected from the group consisting of silicon element and metal elements belonging to the Groups 1, 2, 12, 13, and 14 of the Periodic Table can be also prepared by hydrolyzing respective components separately and then mixing the hydrolyzates. The mixing can be carried out at any stage, for example, after hydrolysis, after solid-liquid separation, after drying, after baking, before pulverization, or the like stage and the timing of mixing is not particularly limited. As mixing methods, there may be mentioned a method of mixing in a state where the hydrolyzate after hydrolysis is present in a specific solvent, a method of mixing in a solid state after drying, and the like method.

In the invention, furthermore, when a catalyst composed of a known layered silicate salt described in "Nendo Kobutsu Gaku" written by Haruo Shiramizu, Asakura shoten (1995) in combination with the above catalyst is used, the polymerization rate is sometimes enhanced, so that such a catalyst system is also preferably used.

As the layered silicate salt, there may be specifically mentioned kaolin Group such as dickite, nacrite, kaolinite, anorchisite, metahalloysite, and halloysite, serpentine Group such as chrysotile, lizardite, and antigorite, smectite Group such as montmorillonite, sauconite, beidellite, nontronite, saponite, hectorite, and stevensite, vermiculite Group such as vermiculite, mica Group such as mica, illite, sericite, and glauconite, attapulgite, sepiolite, palygorskite, bentonite, pyrophyllite, talc, and chlorite Group.

As the above, the catalyst used in the production process of the invention is a catalyst mainly composed of a metal oxide obtained by hydrolyzing a catalyst precursor containing metal element(s) of the Groups 3 to 6 of the Periodic Table. The form varies depending on the kind of the compound and the conditions of hydrolysis, drying or baking, but is usually a metal (composite) oxide and a compound having hydroxyl group thereof. As the compound, there may be, for example, mentioned a compound represented by the following formula: MaSibM'c (OH) xOy
wherein M and M' represent a metal element of the Groups 3 to 6 of the Periodic Table and a metal element belonging to the Groups 1, 2, 12, 13, or 14 of the Periodic Table, respectively, and each may be plurality of metal elements. a, b, and c represents atomic ratios of respective elements and the values of b and c may be 0. x and y are atomic ratios of hydroxyl group and oxygen necessary for satisfying atomic valency of the above each component.

The oxide is not particularly limited and may be a dimeric or polymeric one having a cluster structure such as linear, cyclic, layered, ladder-like, or cage-like one. In the production process of the invention, a catalyst form which is considered to have a particularly high catalytic activity is a metal oxide having a hydroxyl group.

In the invention, the number of the hydroxyl groups contained in the metal oxide is not particularly limited since it varies depending on the kind of metal used, the valency and amount thereof, the conditions of drying or baking, but the upper limit of molar ratio of the hydroxyl group to the total of the metal elements (OH/M) is usually less than 6, preferably 3 or less, more preferably 2 or less. On the other hand, the lower limit is usually 0.0001 or more, preferably 0.01 or more, more preferably 0.1 or more. The molar ratio of the hydroxyl group to the metal elements can be determined by measuring an attached water content and a water content removed by heating according to a known method, e.g., a method as described in JP-A-2001-64377.

Thus, it is apparent that an aliphatic polyester, which induces decrease of molecular weight during the polymerization reaction owing to thermal decomposition and hence formation of high-molecular-weight one has been hitherto considered to be difficult, can be easily produced when such a catalyst is employed. The reason is not clear yet, but is surmised as follows.

Namely, a metal oxide catalyst has characteristics that it is usually low in affinity to an aliphatic polyester (or an ester oligomer) and properties in view of polymerization activity are inferior as compared with a catalyst having an organic group, such as a metal alkoxide. On the other hand, for the same reason, it has a characteristic that thermal decomposition of the polyester, which is a reverse reaction thereof, hardly occurs. Furthermore, surprisingly, it is found in the progress of accomplishing the invention that there is a characteristic that a polymer having a low content of the terminal carboxyl group which remarkably affects thermal stability of the polymer, is produced when a metal oxide catalyst system is used. These characteristics mean that the polyester produced using the metal oxide catalyst has a high thermal stability. Moreover, the polycondensation reaction using a metal oxide catalyst is frequently a heterogeneous catalytic reaction and, in such a catalyst system, there is a characteristic that it becomes difficult for the polymer to access catalytically active points owing to steric hindrance as the molecular weight of the polymer increases. Utilizing this characteristic, when a metal oxide containing a metal element of the Groups 3 to 6 of the Periodic Table having a high Lewis acidity is used as a catalyst and a production process to be described below is applied according to need, it is considered that the reaction rate of the polycondensation reaction is enhanced while the rate of the thermal decomposition reaction is suppressed and hence a polyester with a high polymerization degree is easily obtained. This tendency is considered to be remarkable when a metal oxide having a hydroxyl group is used, owing to increased affinity to an oligomer.

With regard to the amount of the metal oxide to be added, the lower limit is usually 1 ppm or more, preferably 10 ppm or more, more preferably 50 ppm or more and the upper limit is usually 30,000 ppm or less, preferably 3,000 ppm or less, more preferably 500 ppm or less, particularly preferably 250 ppm or less, as an amount in terms of the metal atom of the Group 3 to 6 in the formed polyester. When the amount of the catalyst used is too large, not only the case is disadvantageous in economical viewpoint but also thermal stability of the polymer decreases. To the contrary, when the amount is too small, polymerization activity decreases and thus decomposition of the polymer is apt to be induced during a long-term polymerization.

### Other catalyst

In the invention, a process wherein a compound containing a metal element selected from the Groups 2 to 15 of the Periodic Table and having an organic group is added as a polymerization catalyst in addition to the above metal oxide is a preferred method because a polymerization rate is enhanced in some cases. Such a compound which melts or dissolves in the polyester formed is preferred.

As the metal elements of the Groups 2 to 15 of the periodic table, there may be specifically mentioned scandium, yttrium, samarium, titanium, zirconium, vanadium, chromium, molybdenum, tungsten, tin, antimony, cerium, germanium, zinc, cobalt, manganese, iron, aluminum, magnesium, calcium, and the like. Of these, scandium, yttrium, titanium, zirconium, vanadium, molybdenum, tungsten, zinc, iron, and germanium are preferred and particularly, titanium, zirconium, tungsten, iron, and germanium are preferred.

As forms where the compounds containing these metal elements are melted or dissolved in the polyester, there may be mentioned forms containing an organic group, such as carboxylate salts, alkoxy salts, organic sulfonate salts, or β-diketonate salts containing these metal elements.

Specifically, as the titanium compound, tetraalkyl titanates are preferred. Specifically, there may be mentioned tetra-n-propyl titanate, tetraisopropyl titanate, tetra-n-butyl titanate, tetra-t-butyl titanate, tetraphenyl titanate, tetracyclohexyl titanate, tetrabenzyl titanate, and mixed titanates thereof. In addition, titanium (oxy)acetylacetonate, titanium tetraacetylacetonate, titanium (diisopropoxide) acetylacetonate, titanium bis(ammonium lactate) dihydroxide, titanium bis(ethylacetoacetate) diisopropoxide, titanium (triethanolaminate) isopropoxide, polyhydroxytitanium stearate, titanium lactate, titanium triethanolaminate, butyl titanate dimer, and the like are also preferably used. Of these, tetra-n-propyl titanate, tetraisopropyl titanate, and tetra-n-butyl titanate, titanium (oxy)acetylacetonate, titanium tetraacetylacetonate, titanium bis(ammonium lactate) dihydroxide, polyhydroxytitanium stearate, titanium lactate, and butyl titanate dimer are preferred, and tetra-n-butyl titanate, titanium (oxy)acetylacetonate, titanium tetraacetylacetonate, polyhydroxytitanium stearate, titanium lactate, and butyl titanate dimer are more preferred. Particularly, tetra-n-butyl titanate, polyhydroxytitanium stearate, titanium (oxy)acetylacetonate, and titanium tetraacetylacetonate are preferred.

As the zirconium compound, there may be specifically exemplified zirconium tetraacetate, zirconium acetate hydroxide, zirconium tris(butoxy) stearate, zirconyl diacetate, zirconium oxalate, zirconyl oxalate, zirconium potassium oxalate, polyhydroxyzirconium stearate, zirconium ethoxide, zirconium tetra-n-propoxide, zirconium tetraisopropoxide, zirconium tetra-n-butoxide, zirconium tetra-t-butoxide, zirconium tributoxy acetylacetonate, and mixtures thereof. Of these, zirconyl diacetate, zirconium tris(butoxy) stearate, zirconium tetraacetate, zirconium acetate hydroxide, zirconium ammonium oxalate, zirconium potassium oxalate, polyhydroxyzirconium stearate, zirconium tetra-n-propoxide, zirconium tetraisopropoxide, zirconium tetra-n-butoxide, and zirconium tetra-t-butoxide are preferred, and zirconyl diacetate, zirconium tetraacetate, zirconium acetate hydroxide, zirconium tris(butoxy) stearate, zirconium ammonium oxalate, zirconium tetra-n-propoxide, and zirconium tetra-n-butoxide are more preferred.

As the germanium compound, there may be specifically mentioned organic germanium compounds such as tetraalkoxygermanium. In view of price and availability, tetraethoxygermanium, tetrabutyoxygermanium, and the like are preferred.

As the other metal-containing compound, there may be mentioned scandium compounds such as scandium acetate, scandium butoxide, and scandium acetylacetonate, yttrium compounds such as yttrium butoxide, yttrium acetate, and yttrium acetylacetonate, vanadium compounds such as vanadium butoxide, vanadium acetylacetonate, and vanadium acetylacetonate oxide, molybdenum compounds such as molybdenum butoxide and molybdenum acetate, tungsten compounds such as tungsten butoxide and tungsten acetate, lanthanoid compounds such as cerium butoxide, samarium butoxide, and ytterbium butoxide, and the like.

Moreover, as a catalyst for use in combination with the above metal oxide, in addition to the compound containing a metal element selected from the Group 2 to 15 of the Periodic Table and having an organic group, an inorganic germanium compound can be also preferably used. Specifically, an aqueous solution of germanium oxide or the like may be mentioned.

The amount of the catalyst to be added in the case of using a compound containing a metal element selected from the Group 2 to 15 of the Periodic Table is usually 0.1 ppm or more, preferably 0.5 ppm or more, more preferably 1 ppm or more as a lower limit and is usually 30,000 ppm or less, preferably 1,000 ppm or less, more preferably 250 ppm or less as an upper limit, as a metal amount in the formed polyester.

Moreover, there may be also used a catalyst system to which a mineral acid such as hydrochloric acid or sulfuric acid or a salt thereof, a sulfate ester such as dimethyl sulfate, diethyl sulfate, or ethyl sulfate, an organic sulfonic acid such as methanesulfonic acid, trifluoromethanesulfonic acid, or p-toluenesulfonic acid, an inorganic phosphoric acid such as phosphoric acid, hypophosphorous acid, pyrophosphorous acid, phosphorous acid, hypophosphoric acid, pyrophosphoric acid, triphosphoric acid, metaphosphoric acid, peroxophosphoric acid, or polyphosphoric acid, an inorganic hydrogen phosphate salt such as ammonium hydrogen phosphate, magnesium hydrogen phosphate, calcium hydrogen phosphate, ammonium hydrogen polyphosphate, magnesium hydrogen polyphosphate, or calcium hydrogen polyphosphate, an organic phosphinic acid such as phenylphosphinic acid, benzylphosphinic acid, methylphosphinic acid, n-butylphsophinic acid, cyclohexylphosphinic acid, or diphenylphosphinic acid, and an organic phosphonic acid such as phenylphosphonic acid, benzylphosphonic acid, methylphosphonic acid, n-butylphosphonic acid, or cyclohexylphosphonic acid is added as a co-catalyst. Diol unit

The diol unit in the invention is derived from an aromatic diol and/or aliphatic diol and a known compound can be used but an aliphatic diol is preferably used. The aliphatic diol is not particularly limited as far as it is an aliphatic or alicyclic compound having two OH groups but there may be mentioned an aliphatic diol having a lower limit of the carbon number of 2 or more and an upper limit of usually 10 or less, preferably 6 or less.

Specific examples of the aliphatic diol include ethylene glycol, 1,3-propylene glycol, neopentyl glycol, 1,6-hexamethylene glycol, decamethylene glycol, 1,4-butanediol, 1,4-cyclohexanedimethanol, and the like. They may be used solely or as a mixture of two or more of them.

Of these, ethylene glycol, 1,4-butanediol, 1,3-propylene glycol, and 1,4-cyclohexanedimethanol are preferred. In particular, ethylene glycol and 1,4-butanediol are preferred and furthermore 1,4-butanediol is particularly preferred. The ratio of the aliphatic diol in the total diol components is usually 70 mol% or more, preferably 80 mol% or more in the total diol components.

The aromatic diol is not particularly limited as far as it is an aromatic compound having two OH groups but there may be mentioned an aromatic diol having a lower limit of the carbon number of 6 or more and an upper limit of usually 15 or less. Specific examples of the aromatic diol include hydroquinone, 1,5-dihydroxynaphthalene, 4,4'-dihydroxydiphenyl, bis(p-hydroxyphenyl)methane, bis(p-hydroxyphenyl)-2,2-propane, and the like.

Furthermore, a polyether having hydroxyl end groups may be used in combination with the above aliphatic diol. As the polyether having hydroxyl end groups, the carbon number has a lower limit of usually 4 or more, preferably 10 or more and an upper limit of usually 1,000 or less, preferably 200 or less, more preferably 100 or less.

Specific examples of the polyether having hydroxyl end groups include diethylene glycol, triethylene glycol, polyethylene glycol, polypropylene glycol, polytetramethylene glycol, poly-1,3-propanediol, poly-1,6-hexamethylene glycol, and the like. Moreover, copolymerized polyether of polyethylene glycol and polypropylene glycol, and the like can be also used. The amount of these polyethers having hydroxyl end groups to be used is an amount calculated so as to be usually 90% by weight or less, preferably 50% by weight or less, more preferably 30% by weight or less as the content of the polyester.

### Aliphatic dicarboxylic acid unit

The aliphatic dicarboxylic acid unit in the invention is derived from an aliphatic dicarboxylic acid and/or a derivative thereof. As the aliphatic dicarboxylic acid, specifically, there may be mentioned a linear or alicyclic dicarboxylic acid having usually 2 to 40 carbon atoms, preferably 2 to 12 carbon atoms, such as oxalic acid, malonic acid, succinic acid, glutaric acid, adipic acid, suberic acid, sebacic acid, dimmer acid, cyclohexanedicarboxylic acid, and the like. Moreover, as the derivatives of the aliphatic dicarboxylic acids, there may be used lower alkyl esters such as methyl esters, ethyl esters, propyl esters, butyl esters, and the like esters of the above aliphatic dicarboxylic acids and cyclic acid anhydrides of the above aliphatic dicarboxylic acids, such as succinic anhydride. These may be used solely or as a mixture of two or more of them. Of these, as the aliphatic dicarboxylic acid, adipic acid, succinic acid, or a mixture thereof is preferred and as the derivative of the aliphatic dicarboxylic acid, a methyl ester of adipic acid or succinic acid or a mixture thereof is preferred.

With regard to the aliphatic polyester of the invention, as described blow, a process for producing a polyester with removing these aliphatic dicarboxylic acids and acid anhydrides thereof from the reaction system by distillation can be adopted as one embodiment of a preferred process for producing the polyester. In this case, in order to form free aliphatic dicarboxylic acid and/or an acid anhydride thereof, it is advantageous that the terminal is a carboxyl group, so that an aliphatic dicarboxylic acid is preferably used as the above dicarboxylic acid component. Specifically, since an aliphatic dicarboxylic acid having a relatively small molecular weight and/or an acid anhydride thereof can be relatively easily removed by heating under reduced pressure, adipic acid, succinic acid, or a mixture thereof is preferred and particularly succinic acid is preferred.

Moreover, in addition to the above aliphatic dicarboxylic acid or the derivative thereof, an aromatic dicarboxylic acid or a derivative thereof may be used in combination. Specific examples of the aromatic dicarboxylic acid include terephthalic acid, isophthalic acid, naphthalenedicarboxylic acid, diphenyldicarboxylic acid, and the like. As the derivative of the aromatic dicarboxylic acid, there may be mentioned low alkyl esters of the above aromatic dicarboxylic acids, specifically methyl esters, ethyl esters, propyl esters, butyl esters, and the like. They may be used solely or as a mixture of two or more thereof in addition to the above aliphatic carboxylic acids. Of these, as the aromatic dicarboxylic acid, terephthalic acid is preferred and as the derivative of the aromatic dicarboxylic acid, dimethyl terephthalate is preferred.

The amount of these other dicarboxylic acid components to be used is usually 50 mol% or less, preferably 30 mol% or less, more preferably 10 mol% or less in the total amount of the dicarboxylic acids.

### Other copolymerizable component

In the invention, copolymerizable component(s) in addition to the above diol component(s) and dicarboxylic acid component(s) may be added.

As specific examples of the copolymerizable component, there may be mentioned at least one polyfunctional compound selected from the group consisting of bifunctional oxycarboxylic acids, polyhydric alcohols having three or more functional groups, polybasic carboxylic acids having three or more functional groups, and oxycarboxylic acids having three or more functional groups for forming a crosslinked structure. Of these copolymerizable components, an oxycarboxylic acid is suitably used since a polyester with a high polymerization degree tends to be easily produced.

Specifically, as the bifunctional oxycarboxylic acids, there may be mentioned lactic acid, glycolic acid, hydroxybutyric acid, hydroxycaproic acid, 2-hydroxy-3,3-dimethylbutyric acid, 2-hydroxy-3-methylbutyric acid, 2-hydroxyisocaproic acid, and the like but they may be derivatives thereof, such as esters or lactones of the oxycarboxylic acids, or polymers of the oxycarboxylic acids. Moreover, these oxycarboxylic acids may be used solely or as mixtures of two or more thereof. In the case that optical isomers thereof are present, they may be any of D-form, L-form, or racemic-form and they may be solids, liquids, or aqueous solutions. Of these, easily available lactic acid or glycolic acid is especially preferred. A 30 to 95% aqueous solution of the oxycarboxylic acid is preferred because of its easy availability. In this case, the amount of the oxycarboxylic acid to be used is usually 0.02 mol% or more, preferably 0.5 mol% or more, more preferably 1.0 mol% or more as a lower limit and usually 30 mol% or less, preferably 20 mol% or less, more preferably

10 mol% or less as an upper limit based on the starting monomers.

As the polyhydric alcohols having three or more functional groups, there may be specifically mentioned glycerin, trimethylolpropane, pentaerythritol, and the like and they may be used solely or as mixtures of two or more thereof.

As the polybasic carboxylic acids having three or more functional groups, there may be specifically mentioned propanetricarboxylic acid, pyromellitic anhydride, benzophenonetetracarboxylic anhydride, cyclopentatetracarboxylic anhydride, and the like and they may be used solely or as mixtures of two or more thereof.

As the oxycarboxylic acids having three or more functional groups, there may be specifically mentioned malic acid, hydroxyglutaric acid, hydroxymethylgluraric acid, tartaric acid, citric acid, hydroxyisophthalic acid, hydroxyterephthalic acid, and the like and they may be used solely or as mixtures of two or more thereof. In particular, because of easy availability, malic acid, tartaric acid, and citric acid are preferred.

The amount of the above compounds having three or more functional groups to be used is usually 5 mol% or less, preferably 0.5 mol% or less, more preferably 0.2 mol% or less based on the whole monomer units constituting the polyester since the compounds may cause gel formation.

### Chain extender

In the process of the invention, the polyester of the invention may use a chain extender such as a carbonate compound or a diisocyanate compound but the amount is usually less than 10 mol% in the case of a carbonate bond and a urethane bond based on the whole monomer units constituting the polyester. However, from the viewpoint of using the polyester of the invention as a biodegradable resin, a diisocyante has a problem that a toxic diamine is formed in the progress of its decomposition and may be accumulated in the soil. Also, a diphenyl carbonate-based compound generally used as a carbonate compound has a problem that toxic by-product phenol and unreacted diphenyl carbonate may be left in the polyester. Therefore, the amount is less than 1 mol%, preferably 0.5 mol% or less, more preferably 0.1 mol% or less in the case of a carbonate bond, and is less than 0.06 mol%, preferably 0.01 mol% or less, more preferably 0.001 mol% or less in the case of a urethane bond, based on the whole monomer units constituting the polyester.

As the carbonate compound, there may be specifically exemplified diphenyl carbonate, ditolyl carbonate, bis(chlorophenyl) carbonate, m-cresyl carbonate, dinaphthyl carbonate, dimethyl carbonate, diethyl carbonate, dibutyl carbonate, ethylene carbonate, diamyl carbonate, dicyclohexyl carbonate, and the like. In addition, there can be used carbonate compounds made from the same or different hydroxy compounds, which are derived from hydroxy compounds such as phenols and alcohols.

As the diisocyanate compound, there may be specifically exemplified known diisocyanates such as 2,4-tolylene diisocyanate, a mixture of 2,4-tolylene diisocyanate and 2,6-tolylene diisocyanate, diphenylmethane diisocyanate, 1,5-naphthylene diisocyanate, xylylene diisocyanate, hydrogenated xylylene diisocyanate, hexamethylene diisocyanate, and isophorone diisocyanate and the like.

Moreover, as the other chain extenders, dioxazoline, silicates, and the like may be used. As the silicates, there may be specifically exemplified tetramethoxysilane, dimethoxydiphenylsilane, dimethoxydimethylsilane, diphenyldihydroxysilane, and the like.

Furthermore, in order to increase melt tension, a small amount of a peroxide may be added.

In the invention, monoalcohol, monocarboxlic acid, epoxy compound, and carbodiimide may be also added in order to improve hydrolysis resistance.

### Process for producing aliphatic polyester

As the process for producing the aliphatic polyester in the invention, conventionally known processes may be used. For example, the polyester can be produced e.g., by a general process of melt polymerization wherein a polycondensation reaction is carried out under reduced pressure after an esterification reaction and/or an ester-exchange reaction between the above aliphatic dicarboxylic acid component(s) and the diol component(s) or by a known thermal dehydrative condensation process in a solution using an organic solvent but a process for producing the polyester by melt polymerization without solvent is preferred in view of economical efficiency and simplicity of production step.

The timing of the addition of the metal oxide and the above catalyst used in combination according to need is not particularly limited as far as the timing is before the polycondensation reaction. Thus, the catalyst may be added at the feed of the starting materials or at the start of pressure reduction. Since the catalyst of the invention has a high stability and is hardly deactivated, a method of addition at the feed of the starting materials which realizes a convenient and simple production step is suitably used.

Hitherto known ranges can be adopted as conditions for temperature, time, pressure, and the like.

The reaction temperature for the esterification reaction and/or ester-exchange reaction of the dicarboxylic acid component(s) and the diol component(s) is usually 150°C or higher, preferably 180°C or higher as a lower limit and usually 260°C or lower, preferably 250°C or lower as an upper limit. The reaction atmosphere is usually an atmosphere of an inert gas such as nitrogen or argon. The reaction pressure is usually normal pressure to 10 kPa but normal pressure is preferred.

The reaction time is usually 1 hour or more, and an upper limit is usually 10 hours or less, preferably 4 hours or less.

The subsequent polycondensation reaction is carried out under a pressure, i.e., a degree of vacuum, of usually 0.01 × 10³ Pa or higher, preferably 0.01 × 10³ Pa or higher as a lower limit and usually 1.4 × 10³ Pa or lower, preferably 0.4 × 10³ Pa or lower. When the pressure at the production by polymerization is too high, the production of the polyester by polymerization takes longer time and decrease in molecular weight and coloration due to thermal decomposition of the polyester are caused along with the longer production time and hence there is a tendency that the polyester showing practically sufficient properties is difficult to produce. On the other hand, a process for producing the same using an ultrahigh vacuum polymerization facility is a preferred embodiment in view of enhancing the polymerization rate. However, the process is economically disadvantageous, since extremely large investment in facilities is necessary.

The reaction temperature is in the range of usually 150°C or higher, preferably 180°C or higher as a lower limit and usually 260°C or lower, preferably 250°C or lower as an upper limit. When the temperature is too low, the polymerization rate is extremely low especially in the invention and the production of the polyester with a high polymerization degree not only requires a long period of time but also necessitates a high-power stirring machine, so that the case is economically disadvantageous. On the other hand, when the reaction temperature is too high, the polymerization rate is enhanced but, at the same time, thermal decomposition of the polymer at the production is caused and, as a result, the polyester with a high polymerization degree is difficult to produce.

The reaction time is usually 2 hours or more as a lower limit and usually 15 hours or less, preferably 8 hours or less, more preferably 6 hours or less as an upper limit. When the reaction time is too short, the reaction proceeds insufficiently to obtain the polyester having a low polymerization degree, which is low in tensile elongation percentage at break. Moreover, the content of the carboxyl group terminal in the polymer is sometimes large and deterioration of the tensile elongation percentage at break is remarkable in many cases. On the other hand, when the reaction time is too long, decrease in molecular weight by thermal decomposition of the polyester becomes remarkable and not only the tensile elongation percentage at break is lowered but also the content of the carboxyl group terminal, which affects durability of the polymer, increases through thermal decomposition in some cases.

In the invention, in the case that an aromatic dicarboxylic acid or its alkyl ester is used as a dicarboxylic acid component in combination with the aliphatic carboxylic acid, the order of the addition is not particularly limited and various methods can be adopted, for example, as a first method, a method wherein starting monomers can be charged at once into a reaction vessel and reacted or, as a second method, a method of subjecting diol component(s) and aliphatic dicarboxylic acid(s) or derivative(s) thereof to an esterification reaction or an ester-exchange reaction, then subjecting diol component(s) and aromatic dicarboxylic acid(s) or derivative(s) thereof to an esterification reaction or an ester-exchange reaction, and further subjecting the product to a polycondensation reaction.

In the invention, as a reaction apparatus for producing the polyester, known vertical or horizontal stirring vessel-type reactors can be used. For example, there may be mentioned a method wherein the melt polymerization is carried out using the same or different reaction apparatus in two stages composed of a step of esterification and/or ester exchange reaction and a step of polycondensation under reduced pressure and a stirring vessel-type reactor fitted with an exhaust tube for pressure reduction connecting a vacuum pump and the reactor is used as a reactor for polycondensation under reduced pressure. Moreover, there is preferably used a method wherein a condenser is connected in the middle of the exhaust tube for reduced pressure connecting the vacuum pump and the reactor and volatile components formed during the polycondensation reaction and unreacted monomers are recovered in the condenser.

In the invention, as a process for producing the polyester, there is used a process of carrying out an esterification reaction and/or an ester exchange reaction between dicarboxylic acid component(s) including the above aliphatic dicarboxylic acid(s) and aliphatic diol component(s) and then increasing the polymerization degree by removing diol(s) formed through the ester exchange reaction by distillation or a process of increasing the polymerization degree of the polyester with removing aliphatic dicarboxylic acid(s) and/or acid anhydride(s) thereof from the aliphatic carboxyl terminal of the polyester by distillation.

In the invention, the production process is not particularly limited but the latter process of removing the aliphatic dicarboxylic acid(s) and/or acid anhydride(s) thereof by distillation is particularly preferred because the polyester with a high polymerization degree is easily obtained at a high polymerization rate even at the lower temperature without using any chain extender or the like even when a metal oxide catalyst which is heterogeneous and has a low affinity to the polymer is used. In this case, for the removal of the aliphatic dicarboxylic acid(s) and/or acid anhydride(s) thereof, there is adopted a method of distilling out the aliphatic dicarboxylic acid(s) and/or acid anhydride(s) thereof under heating during the polycondensation reaction under reduced pressure at later stage of the above melt polymerization step but, since the aliphatic dicarboxylic acid(s) are easily converted into acid anhydride(s) under the polycondensation reaction conditions, the acid(s) are distilled out under heating in the form of the acid anhydride(s) in many cases. Moreover, at that time, linear or cyclic ether(s) and/or diol(s) derived from the diol may be also removed together with the aliphatic dicarboxylic acid(s) and/or acid anhydride(s) thereof. Furthermore, the method of removing the cyclic monomer(s) of the dicarboxylic acid component(s) and the diol component(s) concurrently by distillation is a preferred embodiment because the polymerization rate increases.

In the case of producing the polyester using the process of removing the aliphatic dicarboxylic acid(s) and/or acid anhydride(s) thereof by distillation, when the amount of the aliphatic dicarboxylic acid(s) and/or acid anhydride(s) thereof, which is not particularly limited, is usually 30 mol% or more, preferably 50 mol% or more, more preferably 70 mol% or more, further preferably 80 mol% or more, most preferably 90 mol% or more based on the total amount of the aliphatic dicarboxylic acid(s), acid anhydride(s) and the diol to be removed by distillation, the polyester of a high polymerization degree can be easily produced.

In the invention, in the case of producing the polyester with a high polymerization degree by the process of removing the aliphatic dicarboxylic acid(s) and/or acid anhydride(s) thereof by distillation, when the temperature at the outlet at the reaction vessel side of the exhaust tube for reduced pressure connecting the vacuum pump and the reactor is maintained at a temperature equal to or higher than either lower temperature of the melting point of the aliphatic dicarboxylic anhydride or the boiling point of the aliphatic dicarboxylic anhydride at the degree of vacuum at the polycondensation reaction, the acid anhydride formed can be effectively removed from the reaction system and the aimed polyester with a high polymerization degree can be produced for a short period of time, so that the case is preferred. Furthermore, it is more preferred to maintain the temperature of the exhaust tube from the outlet at the reaction vessel side to the condenser at a temperature equal to or higher than either lower temperature of the melting point of the acid anhydride or the boiling point of the acid anhydride at the degree of vacuum at the polycondensation reaction.

In the invention, a preferable range of the molar ratio of the diol component(s) to the dicarboxylic acid component(s) for obtaining the polyester having an aimed polymerization degree varies depending on the purpose thereof and the kinds of the starting materials but the amount of the diol component relative to 1 mol of the diacid component(s) is usually 0.8 mol or more, preferably 0.9 mol or more as a lower limit and usually 1.5 mol or less, preferably 1.3 mol or less, particularly preferably 1.2 mol or less.

Furthermore, in the invention, although the process is not particularly limited, in the process for producing the polyester with a high polymerization degree by removing the aliphatic dicarboxylic acid(s) and/or acid anhydride(s) thereof by distillation which is a particularly preferred embodiment for the production of the polyester with a high polymerization degree, it is not necessary to use more excessive diol as a starting material as is used in conventional processes since a larger content of the terminal carboxylic acid is advantageous for the polymerization. In this case, a preferable range of the molar ratio of the diol component(s) to the dicarboxylic acid component(s) also varies depending on the aimed polymerization degree and kind of the polyester but the amount of the diol component(s) relative to 1 mol of the diacid component(s) is usually 0.8 mol or more, preferably 0.9 mol or more, more preferably 0.95 or more as a lower limit and usually 1.15 mol or less, preferably 1.1 mol or less, more preferably 1.08 mol or less as an upper limit.

On the other hand, when the process for producing the polyester by removing the aliphatic dicarboxylic acid(s) and/or acid anhydride(s) thereof by distillation is used, the polyester produced has a large content of the terminal carboxylic acid in the case of a low polymerization degree as compared with the cases of conventional processes, so that there is a fear of increase in the content of the carboxylic acid terminal which remarkably adversely affects thermal stability of the polymer. However, a polyester having a high reduced viscosity (ηsp/C) which is a measure of polymerization degree is a polyester having a low content of the terminal carboxyl acid and an excellent thermal stability.

### Aliphatic polyester and application thereof

With regard to the preferred polyester produced in the invention, the amount of the metal oxide(s) belonging to the Groups 3 to 6 of the Periodic Table in the polyester is usually 1 ppm or more, preferably 10 ppm or more, more preferably 50 ppm or more as a lower limit and is usually 30,000 ppm or less, preferably 3,000 ppm or less, more preferably 500 ppm or less, particularly preferably 250 ppm or less as an upper limit, as an amount in terms of metal atom(s).

Such a polyester is a polyester excellent in hydrolysis resistance and thermal stability since binding ability/affinity of the residual catalyst to the polyester is low and an acceleration effect on hydrolysis and thermal decomposition induced by the residual catalyst can be suppressed as compared with the case of the polyester containing a catalyst having an organic substituent such as a metal alkoxide. The polyester of the invention similarly exhibiting suppression of hydrolysis and thermal decomposition to be induced by the residual catalyst can be also produced by a process of producing a polyester using a conventional catalyst having an organic group and then treating the residual catalyst in the polyester with water but this process usually also induces depolymerization through hydrolysis of the polyester and hence is not a preferred process.

Since the polyester produced by the process of the invention has a characteristic that the content of the carboxylic acid terminal which remarkably adversely affects thermal stability of the polymer is usually small, the polyester has characteristics that thermal stability is excellent and the quality is less deteriorated during molding, that is, little side reactions such as cleavage of the terminal group and cleavage of the main chain occur during melt molding. The number of the terminal COOH groups in the polyester obtained according to the invention is usually 20 eq/ton or less although it depends on the polymerization degree. Therefore, the number of the terminal COOH groups in the polyester obtained according to the invention is usually 20 eq/ton or less, preferably 15 eq/ton or less, more preferably 10 eq/ton or less. On the other hand, when the content of the terminal carboxyl group is extremely small, the polymerization rate significantly decreases and thus a polymer having a high polymerization degree cannot be produced. For the reason, a lower limit of the number of the terminal COOH group of the polyester is usually 0.1 eq/ton or more, more preferably 1 eq/ton.

The reduced viscosity (ηsp/C) value of the polyester produced in the invention is 1.6 or more because practically sufficient mechanical properties are obtained. Particularly, 2.0 or more is preferred and furthermore 2.2 or more, particularly 2.3 or more is preferred. An upper limit of the reduced viscosity (ηsp/C) value is usually 6.0 or less, preferably 5.0 or less, further preferably 4.0 or less in view of operability such as removability and moldability of the polyester after the polymerization reaction.

The reduced viscosity in the invention is measured under the following measuring conditions.

### [Measuring conditions for reduced viscosity (ηsp/C)]

Viscosity tube: Ubbelohde's viscosity tube
Measuring temperature: 30°C
Solvent: phenol/tetrachloroethane (1:1 weight ratio) solution
Polyester concentration: 0.5 g/dl

During the production process of the invention or to the polyester obtained, various additives, for example, a heat stabilizer, an antioxidant, a crystal nucleating agent, a flame retardant, an antistatic agent, a release agent, a UV absorber, and the like may be added at the time of polymerization within a range not impairing the properties.

Moreover, at the time of molding, in addition to the above various additives, a reinforcing agent and a filler, such as glass fiber, carbon fiber; titanium whisker, mica, talc, CaCO₃, TiO₂, or silica may be added and then molding can be effected.

Since the polyester obtained by the production process of the invention is excellent in thermal resistance and color tone and is further excellent in hydrolysis resistance and biodegradability and also the polyester can be produced inexpensively, it is suitable for applications of various films and applications of injection-molded articles.

Specific applications include injection-molded articles (e.g., trays for fresh foods, containers for fast foods, products for outdoor leisure, etc.), extrusion-molded articles (films, sheets, and the like, e.g., fishing lines, fishing nets, vegetation nets, water-holding sheets, etc.), blow molded articles (bottles, etc.), and the like. In addition, the polyester can be utilized for agricultural films, coating materials, coating materials for fertilizer, laminate films, plates, drawn sheets, monofilaments, multifilaments, nonwoven fabrics, flat yarn, staple, crimped staple, striped tapes, split yarn, compound fibers, blow bottles, foams, shopping bags, garbage bags, compost bags, containers for cosmetics, containers for detergent, containers for bleach, ropes, lashings, surgical strings, sanitary cover stock materials, cold boxes, cushioning films, synthetic papers, and the like.

### Examples

The following will describe the invention further in detail with reference to Examples but the invention is not limited to the following Examples unless it exceeds the gist.

### Content of terminal carboxyl group

It is a value obtained by dissolving the obtained polyester in benzyl alcohol and titrating it with 0.1M NaOH, and is an equivalent amount of the carboxyl group per 1 × 10⁶ g of polyester.

### Content of terminal OH group

It is a value determined on ¹H-NMR and is an equivalent amount of the OH group per 1 × 10⁶ g of polyester.

### Example 1

### Preparation of catalyst

Into a 1 L beaker was weighed 300 ml of ionexchange water. After the beaker was cooled in an ice bath, 20 ml of titanium tetrachloride (TiCl₄) was added dropwise thereto under stirring. After the dropwise addition, the beaker was taken out of the ice bath when generation of hydrogen chloride ceased. Thereto was added 4.1 g of magnesium chloride hexahydrate (MgCl₂·6H₂O), which was then dissolved. Furthermore, 22.2 g of tetraethoxysilane (Si(OC₂H₅)₄) was added and dispersed therein under stirring. Subsequently, under stirring of the beaker, 4N ammonia water was added dropwise until pH of the liquid in the beaker reached 7.4. The precipitate formed by the dropwise addition was filtrated under suction, dried at 80°C under reduced pressure after washing, and pulverized into 100 µm or less to obtain a composite oxide catalyst. An atomic ratio of Ti:Mg:Si fed in the present Example is 60:7:33. Melt polycondensation

To a reaction vessel equipped with a stirring apparatus, a nitrogen inlet, a heating apparatus, a thermometer, and an outlet for pressure reduction were fed 100.3 g (0.85 mol) of succinic acid, 81.9 g (0.91 mol) of 1,4-butanediol, 0.37 g (2.8 × 10⁻³ mol, 0.33 mol% relative to succinic acid) of malic acid, and 0.06 g of the composite oxide catalyst produced in Example 1 as a catalyst, and the inner system was made a nitrogen atmosphere by replacement with nitrogen under reduced pressure.

Then, the inner system was heated to 220°C under stirring and they were reacted at this temperature for 1 hour. Thereafter, the temperature was elevated to 230°C over a period of 30 minutes and, at the same time, the pressure was reduced to 0.07 × 10³ Pa over a period of 1 hour and 30 minutes. Furthermore, 6.7 hours of the reaction was carried out under reduced pressure of 0.07 × 10³ Pa to obtain a polyester. During the polycondensation reaction under reduced pressure, the outlet for pressure reduction of the reaction vessel was continued to heat at 130°C. Main volatile components distilled out from the outlet for pressure reduction during the polymerization were water, succinic anhydride, tetrahydrofuran, a cyclic monomer of succinic acid and butanediol, and.a small amount of 1,4-butanediol. The reduced viscosity (ηsp/C) of the resulting polyester was 2.1, the content of the terminal carboxyl group was 8 eq/ton, and the content of the terminal OH group was 77 eq/ton.

### Example 2

### Preparation of catalyst

Similar operations in Example 1 were conducted except that titanium chloride (TiCl₄) was used in an amount of 4.1 ml, magnesium chloride hexahydrate (MgCl₂·6H₂O) was used in an amount of 7.6 g, and tetraethoxysilane (Si(OC₂H₅)₄) was used in an amount of 40.8 g. An atomic ratio of Ti:Mg:Si fed in the present Example is 14:14:72. The average particle size of the resulting composite oxide catalyst was 44 µm.

### Melt-polycondensation

In the feeding of starting materials in Example 1, similar operations were conducted except that 0.18 g of the composite oxide catalyst produced in Example 2 is used as a catalyst. Then, the inner system was made a nitrogen atmosphere by replacement with nitrogen under reduced pressure.

Then, the inner system was heated to 220°C under stirring and they were reacted at this temperature for 1 hour. Thereafter, the temperature was elevated to 230°C over a period of 30 minutes and, at the same time, the pressure was reduced to 0.07 × 10³ Pa over a period of 1 hour and 30 minutes. Furthermore, 5.5 hours of the reaction was carried out under reduced pressure of 0.07 × 10³ Pa to obtain a polyester. During the polycondensation reaction under reduced pressure, the outlet for pressure reduction of the reaction vessel was continued to heat at 130°C. Main volatile components distilled out from the outlet for pressure reduction during the polymerization were water, succinic anhydride, tetrahydrofuran, a cyclic monomer of succinic acid and butanediol, and a small amount of 1,4-butanediol. The reduced viscosity (ηsp/C) of the resulting polyester was 2.6, the content of the terminal carboxyl group was 7 eq/ton, and the content of the terminal OH group was 75 eq/ton.

### Example 3

### Melt-polycondensation

In the feeding of starting materials in Example 1, similar operations were conducted except that 0.067 g of Product Name:C-94 manufactured by Acordis Industrial Fibers as a catalyst. Then, the inner system was made a nitrogen atmosphere by replacement with nitrogen under reduced pressure.

Then, the inner system was heated to 220°C under stirring and they were reacted at this temperature for 1 hour. Thereafter, the temperature was elevated to 230°C over a period of 30 minutes and, at the same time, the pressure was reduced to 0.07 × 10³ Pa over a period of 1 hour and 30 minutes. Furthermore, 4 hours and 15 minutes of the reaction was carried out under reduced pressure of 0.07 × 10³ Pa to obtain a polyester. During the polycondensation reaction under reduced pressure, the outlet for pressure reduction of the reaction vessel was continued to heat at 130°C. Main volatile components distilled out from the outlet for pressure reduction during the polymerization were water, succinic anhydride, tetrahydrofuran, a cyclic monomer of succinic acid and butanediol, and a small amount of 1,4-butanediol. The reduced viscosity (ηsp/C) of the resulting polyester was 2.4, the content of the terminal carboxyl group was 8 eq/ton, and the content of the terminal OH group was 62 eq/ton.

### Method for manufacturing and evaluating film

The resulting polymer was melted at 150°C for 3 minutes and further pressed at 150°C under 20 MPa for 2 minutes using a bench-type press machine to obtain Film A having a thickness of about 150 µm. The resulting press film was placed in a constant temperature and humidity chamber of 50°C and 90% R.H. and sampled after 7 days, and solution viscosity and tensile elongation percentage at break were measured.

The tensile test was carried out using a test piece punched from the film into a dumbbell shape (length 10 cm) (speed of drawing = 200 mm/min, distance between marks = 10 mm, distance between chucks = 60 mm). The results are shown in Table 1.

Moreover, the polyester pellets separately prepared in a similar manner were extruded at 160°C from a cylindrical die having a diameter of 75 mm to obtain a film having a thickness of 50 µm. As a result, a homogeneous good film was obtained.

### Example 4

### Melt polycondensation

To a reaction vessel equipped with a stirring apparatus, a nitrogen inlet, a heating apparatus, a thermometer, and an outlet for pressure reduction were fed 73.2 g (0.62 mol) of succinic acid, 31.8 g (0.21 mol) of adipic acid, 75.57 g (0.84 mol) of 1,4-butanediol, and 0.067 g of Product Name:C-94 manufactured by Acordis Industrial Fibers (Ti content in produced polymer: 2 × 10² ppm), and the inner system was made a nitrogen atmosphere by replacement with nitrogen under reduced pressure.

Then, the inner system was heated to 220°C under stirring and they were reacted at this temperature for 1 hour. After 0.36 g of zirconium tributoxystearate (manufactured by Matsumoto Trading Co., Ltd.) (Zr content in the produced polymer: 3 × 10² ppm) was added to the reaction system, the temperature was elevated to 230°C over a period of 30 minutes and, at the same time, the pressure was reduced to 0.07 × 10³ Pa over a period of 1 hour and 30 minutes. Furthermore, 4.5 hours of the reaction was carried out under reduced pressure of 0.07 × 10³ Pa to obtain a polyester. During the polycondensation reaction under reduced pressure, the outlet for pressure reduction of the reaction vessel was continued to heat at 130°C. Main volatile components distilled out from the outlet for pressure reduction during the polymerization were water, succinic anhydride, tetrahydrofuran, a cyclic monomer of succinic acid or adipic acid and butanediol, and a small amount of 1,4-butanediol. The reduced viscosity (ηsp/C) of the resulting polyester was 2.9, the content of the terminal carboxyl group was 19 eq/ton, and the content of the terminal OH group was 26 eq/ton.

### Comparative Example 1

To a reaction vessel equipped with a stirring apparatus, a nitrogen inlet, a heating apparatus, a thermometer, and an outlet for pressure reduction were fed 100.3 g (0.85 mol) of succinic acid, 82.7 g (0.92 mol) of 1,4-butanediol, 0.37 g (2.8 × 10⁻³ mol, 0.33 mol% relative to succinic acid) of malic acid, and 0.107 g of titanium tetra-n-butoxide (Ti content in produced polymer: 1 × 10² ppm), and the inner system was made a nitrogen atmosphere by replacement with nitrogen under reduced pressure.

Then, the inner system was heated to 220°C under stirring and they were reacted at this temperature for 1 hour. Thereafter, the temperature was elevated to 230°C over a period of 30 minutes and, at the same time, the pressure was reduced to 0.07 × 10³ Pa over a period of 1 hour and 30 minutes. Furthermore, 5 hours of the reaction was carried out under reduced pressure of 0.07 × 10³ Pa to obtain a polyester. During the polycondensation reaction under reduced pressure, the outlet for pressure reduction of the reaction vessel was continued to heat at 130°C. The reduced viscosity (ηsp/C) of the resulting polyester was 2.4, the content of the terminal carboxyl group was 16 eq/ton, and the content of the terminal OH group was 55 eq/ton.

### Method for manufacturing and evaluating film

Formation of film B and evaluation were carried out in the same manner as in Example 3. The results are shown in Table 1. From these results, it is found that the polyesters produced using the metal oxide catalysts are excellent in tensile properties.

Moreover, as a result of extruding polyester pellets separately produced in the same manner from a cylindrical die having a diameter of 75 mm at 160°C to form a film having a thickness of 50 µm, white clumps (from minute ones to white solids of several mm order) which were considered to be decomposition products of the catalyst were observed in the film at a rate of 5 to 6 pieces/cm² all over the film.

**Table 1**

| | Days of storage | | 0 day | 7 days |
|---|---|---|---|---|
| Example 3 | Film A | ηsp/C | 2.4 | 2.2 |
| | | Elongation (%) | 400 | 250 |
| Comparative | Film B | ηsp/C | 2.4 | 2.2 |
| Example 1 | | Elongation (%) | 400 | 0 |

While the invention has been described in detail with reference to specific embodiments thereof, it will be apparent to one skilled in the art that various changes and modifications can be made therein without departing from the spirit and scope thereof.

The present application is based on Japanese Patent Application No. 2003-323134 filed on September 16, 2003, and the contents are incorporated herein by reference.

### Industrial Applicability

According to the present invention, there is easily produced an aliphatic polyester with a high polymerization degree having sufficient tensile properties by the use of a specific metal oxide as a catalyst in an industrially advantageous and efficient production process. Furthermore, the polyesters of the invention are polyesters excellent in mechanical physical properties such as moldability in injection molding, blow molding, extrusion molding, or the like, thermal stability, and tensile properties because thermal decomposition and thermal deterioration induced by a residual catalyst and a carboxylic acid terminal are reduced.

## Claims

1. A process for producing an aliphatic polyester having diol unit(s) and aliphatic dicarboxylic acid unit(s), wherein a metal oxide containing at least one element selected from the group consisting of metal elements belonging to the Groups 3 to 6 of the Periodic Table and at least one element selected from the group consisting of silicon element and metal elements belonging to the Groups 1, 2, 12, 13, and 14 of the Periodic Table is used as a catalyst.

2. The process for producing the aliphatic polyester according to claim 1, wherein the metal oxide has a hydroxyl group.

3. The process for producing the aliphatic polyester according to claim 1 or 2, wherein the metal oxide is a hydrolysate of a mixture containing inorganic and/or organic compound(s) containing metal element(s) selected from the Groups 3 to 6 of the Periodic Table and compound(s) containing at least one element selected from the group consisting of silicon element and metal elements belonging to the Groups 1, 2, 12, 13, and 14 of the Periodic Table.

4. The process for producing the aliphatic polyester according to any one of claims 1 to 3, wherein a compound containing a metal element selected from the Groups 2 to 15 of the periodic table and having an organic group is used in combination.

5. The process for producing the aliphatic polyester according to any one of claims 1 to 4, wherein aliphatic dicarboxylic acid(s) and/or derivative(s) thereof and aliphatic diol(s) are subjected to melt polycondensation in the presence of a catalyst.

6. The process for producing the aliphatic polyester according to claim 5, wherein the melt polycondensation is carried out with removing at least one of the aliphatic dicarboxylic acids and acid anhydrides thereof.

7. The process for producing the aliphatic polyester according to claim 5 or 6, wherein the melt polycondensation is carried out using a stirring vessel-type reactor equipped with an outlet for pressure reduction and with maintaining at a temperature equal to or higher than either lower temperature of the melting point of the aliphatic dicarboxylic anhydride or the boiling point of the aliphatic dicarboxylic anhydride under the degree of vacuum at the polycondensation reaction.

8. The process for producing the aliphatic polyester according to any one of claims 5 to 7, wherein the melt polycondensation is carried out at a temperature of from 180°C to 250°C.

9. The process for producing the aliphatic polyester according to any one of claims 1 to 8, wherein reduced viscosity (ηsp/C) of the resulting polyester is 1.6 or more.

10. An aliphatic polyester comprising aliphatic diol unit(s) and aliphatic dicarboxylic acid unit(s), wherein the amount of a metal oxide belonging to the Group 3 to 6 of the Periodic Table contained in the polyester is from 1 ppm to 3,000 ppm as an amount in terms of the metal atom of the Group 3 to 6 and reduced viscosity (ηsp/C) is 1.6 or more.

11. The aliphatic polyester according to claim 10, wherein a content of a carbonate bond contained in the polyester is less than 1 mol%, and a content of a urethane bond is less than 0.06 mol%, based on the whole monomer units constituting the polyester.

12. The aliphatic polyester according to claim 10 or 11, wherein the number of terminal COOH groups in the aliphatic polyester is 20 eq/ton or less.
